# EUROPÄISCHE PATENTSCHRIFT

(11) **EP 1 759 883 B1**
(45) Veröffentlichungstag und Bekanntmachung des Hinweises auf die Patenterteilung: **28.10.2009**
(21) Anmeldenummer: 06017427.3
(22) Anmeldetag: 22.08.2006
(51) Int. Cl.: B60B 27/02, A01D 34/68, F16D 1/06

(54) **Radanordnung eines handgeführten, fahrbaren Arbeitsgerätes**
Wheel assembly of a mobile working apparatus
Ensemble roued' un appareil de travail mobile

(30) Priorität: 02.09.2005 DE 202005013849 U
(43) Veröffentlichungstag der Anmeldung: 07.03.2007
(73) Patentinhaber: Viking GmbH, 6336 Langkampfen-Kufstein (AT)
(72) Erfinder: Duregger, Georg, 6342 Niederndorf (AT)
(74) Vertreter: Wasmuth, Rolf

(56) Entgegenhaltungen:
- DE-A1- 2 224 437
- DE-U1- 20 315 460
- US-A- 2 049 883
- US-A- 2 744 800

## Beschreibung

Die Erfindung betrifft eine Radanordnung eines handgeführten, fahrbaren Arbeitsgerätes wie einen Rasenmäher, eine Motorhacke, einen Vertikutierer oder dgl. mit den Merkmalen nach dem Oberbegriff des Anspruchs 1, und wie sie aus dem US 2 744 800 A bekannt ist.

Am Beispiel eines Rasenmähers wird deutlich, daß bei derartigen Arbeitsgeräten Laufräder erforderlich sind, die einerseits das Gewicht des Arbeitsgerätes tragen und andererseits einen definierten Abstand zu der zu bearbeitenden Oberfläche herstellen, wodurch die Schnitthöhe des zu mähenden Rasens vorgegeben wird. Für ein einwandfreies Arbeitsergebnis ist es wichtig, daß die Räder unter Arbeitslast leichtgängig auf der zu bearbeitenden Oberfläche abrollen. Es wird angestrebt, daß das Arbeitsgerät auch bei unebenen bzw. weichen Bodenoberflächen mit geringem Kraftaufwand rollend geschoben werden kann. Auch bei motorisch angetriebenen Radanordnungen ist es wichtig, daß die nicht angetriebenen, freilaufenden Räder zur Ausnutzung der verfügbaren Antriebsleistung mit nur geringem Widerstand abrollen.

Bei vorbekannten Radanordnungen werden zur Lagerung der freilaufenden Räder Wälzlager eingesetzt, mit denen sie auf einer Achse frei drehend gelagert sind. Bevorzugt werden Kugellager eingesetzt, die bei einer geeigneten Auslegung sehr leichtgängig sind. Für eine optimale Ausnutzung der Leichtgängigkeit solcher Wälzlager in Verbindung mit einer dauerhaft hohen Belastbarkeit ist eine präzise Montage erforderlich. Ein Lagersitz der Achse ist mit exakten Toleranzen auf den Innendurchmesser des Lagerinnenringes anzupassen. Toleranzbedingtes Spiel schmälert die Leichtgängigkeit und kann zu erhöhtem Verschleiß führen. Der genauigkeitsbedingte Fertigungsaufwand der Achse ist entsprechend hoch. Bei einer doppelten Wälzlagerung mit zwei gegeneinander verspannten Schrägwälzlagern kommt noch das Erfordernis einer exakten Einstellung des axialen Lagerspiels hinzu. Der hierzu erforderliche Montage- und Prüfaufwand ist hoch. Auch können unerwünscht kurze Wartungsintervalle erforderlich werden, in denen das axiale Lagerspiel nachzustellen ist. Eine Vernachlässigung dieses Aspekts kann zu einem schlechteren Laufverhalten und zu einem erhöhten Verschleiß führen.

Der Erfindung liegt die Aufgabe zugrunde, eine Radanordnung eines gattungsgemäßen Arbeitsgerätes anzugeben, bei der mit verringertem Aufwand eine dauerhaft zuverlässige Laufqualität sichergestellt ist.

Die Aufgabe wird durch eine Radanordnung mit den Merkmalen des Anspruchs 1 gelöst.

Es wird eine Radanordnung vorgeschlagen, bei der in radialer Richtung zwischen der Achse und dem Innenring des Wälzlagers ein konisches, in radialer Richtung elastisch aufweitbares Klemmteil angeordnet ist. Es kann zweckmäßig sein, das Klemmteil mit einem Außenkonus zu versehen, der mit einem Innenkonus des Wälzlagers zusammenwirkt. Bevorzugt weist die Achse im Bereich des Wälzlagers einen Außenkonus auf, während das Klemmteil mit einem auf den Außenkonus abgestimmten Innenkonus versehen ist. Die Achse braucht insbesondere am Außenkonus mit nur groben Fertigungstoleranzen bearbeitet werden. Eine exakte Zentrierung des Innenringes vom Lager erfolgt durch axiales Aufschieben des Klemmteiles. Die aufgleitenden Konusflächen bewirken eine radiale Ausdehnung des Klemmteiles, welches sich von innen unter Ausgleich der Fertigungstoleranzen an den Innenring des Lagers anschmiegt und eine lagegenaue radiale Fixierung herbeiführt. Eine exakte Justierung des Lagers ist nicht erforderlich. Vielmehr wird das Klemmteil einfach nur mit der erforderlichen axialen Anpreßkraft zwischen Achse und Lager eingedrückt, bis dieses stramm zwischen beiden Bauteilen sitzt. Einstell-, Meß- und Prüfaufwand erübrigen sich. Das Lager ist exakt koaxial zur Achse ausgerichtet und stellt mit geringem Aufwand eine spielfreie, laufruhige Lagerung sicher.

Bevorzugt ist das Klemmteil radial außenseitig zylindrisch ausgeführt und in seinem Durchmesser auf eine zylindrische Innenfläche des Innenrings abgestimmt. Die axiale Positionierung des Lagers kann damit unabhängig von der axialen Klemmpositionierung des Klemmstückes erfolgen. Es können Standardwälzlager verwendet werden, die in genormter Bauweise eine zylindrische Innenfläche aufweisen.

In bevorzugter Weiterbildung weist das Klemmteil einen in radialer und axialer Richtung verlaufenden, insbesondere durchgehenden Schlitz auf. Zu der Elastizität des Klemmteilmaterials beispielsweise aus Kunststoff kommt noch eine durch den Schlitz hervorgerufene Formelastizität, die ein radiales Aufweiten bei nur geringen axialen Anpreßkräften begünstigt.

Die Achse trägt zweckmäßig an einer freien Stirnfläche eine insbesondere koaxial angeordnete Radschraube, die zum axialen Verspannen des Klemmteils vorgesehen ist. Die Radschraube in Form einer Gewindeschraube mit Kopf oder eines Gewindezapfens mit einer darauf aufzuschraubenden Mutter ermöglicht ein einfaches, ggf. automatisiertes axiales Verspannen des Klemmteiles bis zum gewünschten Punkt der radialen Aufweitung bzw. zentrierenden Verspannung.

In einer bevorzugten Ausführung ist das Klemmteil auf seiner zur freien Stirnfläche der Achse hin weisenden Seite mit einem radial vorstehenden Flansch zum axialen Verspannen des Innenrings vom Wälzlager versehen. Neben der radialen Fixierung des Innenrings durch die vorstehend beschriebene radiale Aufweitung führt der axiale Verspannweg des Klemmteiles in Doppelfunktion auch zu einer axialen Verspannung bzw. Fixierung des Innenrings. Durch Anziehen der vorgenannten Radschraube wird das Lager in einem Arbeitsgang radial und axial ausgerichtet.

Der Flansch ist zweckmäßig in axialer Richtung elastisch federnd ausgebildet. Vorteilhaft weist er mindestens eine, insbesondere mehrere und bevorzugt gleichmäßig über den Umfang verteilte, in axialer Richtung elastisch nachgiebige Federzungen auf, die zur axialen Anlage am Innenring des Wälzlagers vorgesehen sind. Die elastische Nachgiebigkeit bewirkt auch in axialer Richtung einen Toleranzausgleich, demnach die Achse kostengünstig mit groben Toleranzmaßen gefertigt werden kann. Ein axiales Überspannen der Lageranordnung ist vermieden. Die über den Umfang verteilte Anordnung der Federzungen bewirkt eine gleichmäßige, verteilte und verkantungsfreie Krafteinleitung in den Lagerinnenring.

In vorteilhafter Weiterbildung verläuft eine Längsachse der Federzunge zumindest näherungsweise in Umfangsrichtung zum Klemmteil, wobei eine Wurzel der Federzunge an einem radial hervorstehenden, im wesentlichen starren Kragarm gehalten ist. Das freie Ende der auf diese Weise ausgebildeten Federzunge kann durch die Länge der Federzunge einen vergleichsweise großen Federweg ausführen, ohne dabei einen zu großen radialen Abstand zur Mittelachse aufzuweisen. Innenringe mit geringem Durchmesser können bei kompakter Bauweise des Klemmteils mit großem elastischem Federweg axial vorgespannt und in ihrer Lagetoleranz ausgeglichen werden. Der starre Kragarm erzeugt definierte Einspannbedingungen für die Wurzel der Federzunge und damit für eine konstruktiv präzise vorgebbare Federcharakteristik.

In bevorzugter Ausbildung sind insgesamt zwei Wälzlager in Form von Schrägwälzlagern, insbesondere Schrägkugellagern vorgesehen, deren Innenringe unter Zwischenlage von Wälzkörpern und Außenringen der Wälzlager mittels des Klemmteils in axialer Richtung gegeneinander verspannt sind. Es entsteht eine verkantungsfreie Lagerung des Rades, die eine hohe Tragfähigkeit gegen seitliche Belastungen bzw. Kippmomente aufweist. Die axiale Verspannung der gesamten Lageranordnung unter Herausnahme des Lagerspiels erfolgt in einem einzigen Arbeitsschritt durch axiales Festziehen des Klemmteils. In Verbindung mit den elastischen Federzungen wird eine derartige axiale Verspannung der Lageranordnung bewirkt, daß gleichzeitig eine Eliminierung des axialen Lagerspiels und eine Verhinderung einer axialen Überspannung sichergestellt ist. Leichtgängigkeit und Tragfähigkeit der Lagerung können mit geringem Aufwand herbeigeführt werden. Die elastische Verspannung vermeidet die Notwendigkeit von Nachstellarbeiten. Die beim Montagevorgang selbsttätig herbeigeführte Lagerjustierung bleibt dauerhaft erhalten.

Ein Ausführungsbeispiel der Erfindung ist im folgenden anhand der Zeichnung näher beschrieben. Es zeigen:
- Fig. 1: in einer perspektivischen Ansicht ein handgeführtes, fahrbares Arbeitsgerät am Beispiel eines Rasenmähers, dessen Radanordnung drei freilaufende Räder umfaßt;
- Fig. 2: eine perspektivische Darstellung eines erfindungsgemäßen Klemmteiles zur Verspannung der Radlager des Arbeitsgerätes nach Fig. 1;
- Fig. 3: eine Draufsicht des Klemmteils nach Fig. 2 mit Einzelheiten zur geometrischen Ausbildung von Federzungen und einer mit einem Schlitz versehenen Nabe;
- Fig. 4: eine Längsschnittdarstellung des Klemmteils nach den Fig. 2 und 3 mit einer Darstellung des in der Nabe des Klemmteils eingeformten Innenkonus;
- Fig. 5: eine perspektivische Längsschnittdarstellung der Radlagerung eines der Räder nach Fig. 1 mit Einzelheiten des axial verspannten und radial aufgeweiteten Klemmteils nach den Fig. 2 bis 4;
- Fig. 6: eine weitere perspektivische Schnittdarstellung der Anordnung nach Fig. 5 mit Details der axialen Verspannung des Lagerinnenringes durch die Federzungen des Klemmteils.

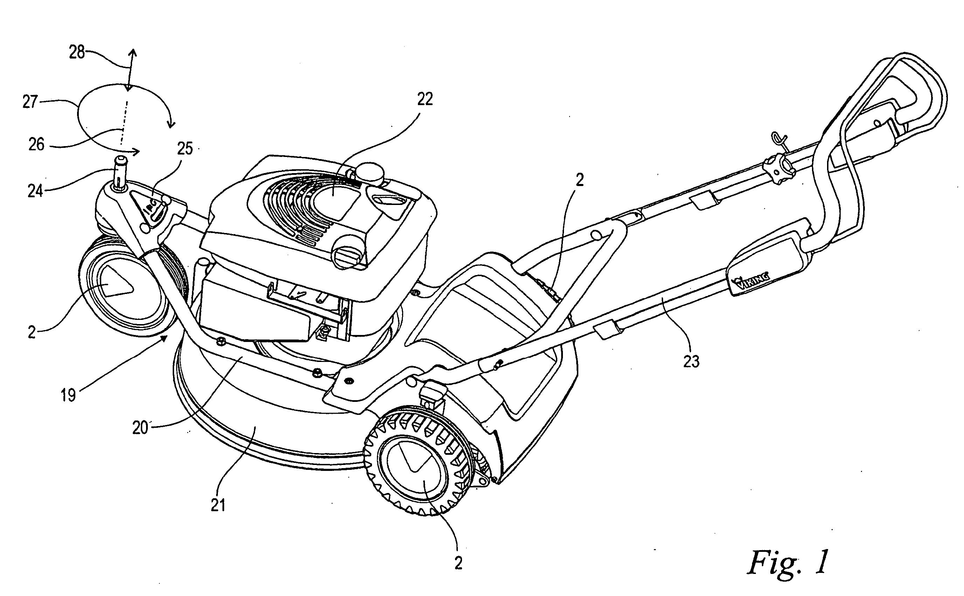

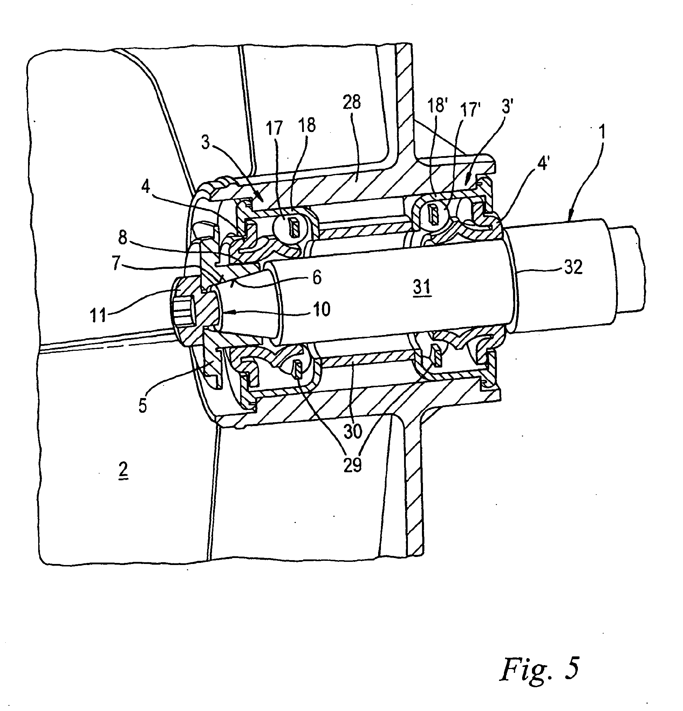

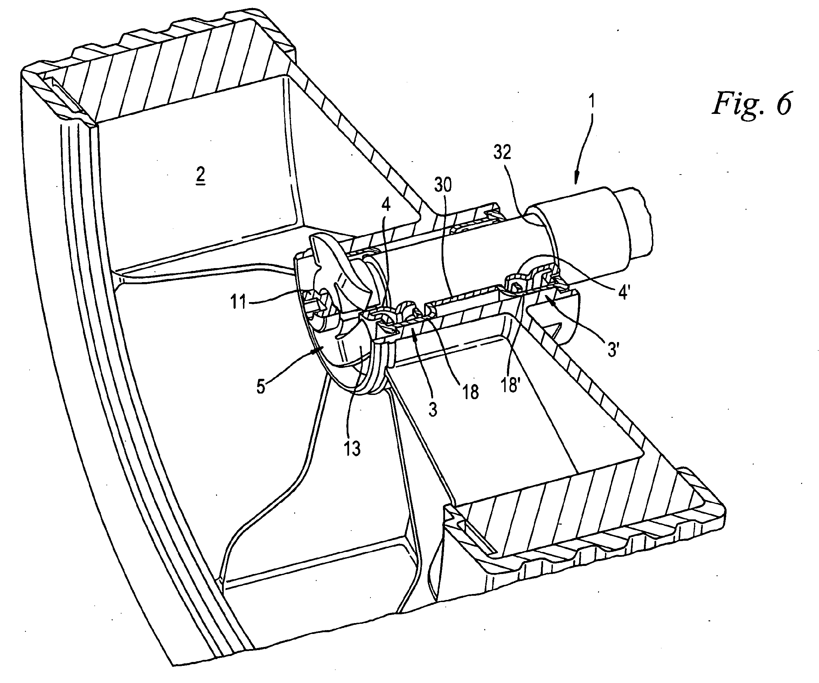

Fig. 1 zeigt in einer perspektivischen Übersichtsdarstellung ein fahrbares Arbeitsgerät am Beispiel eines dreirädrigen Rasenmähers. Es kann auch ein Mulchgerät, eine Motorhacke, ein Vertikutierer oder dgl. vorgesehen sein. Der Rasenmäher weist einen Rahmen 19 auf, der im gezeigten Ausführungsbeispiel aus Rahmenrohren 20 gebildet ist. Mit dem Rahmen 19 ist ein Mähwerk 21 sowie ein Antriebsmotor 22 für das Mähwerk 1 fest verbunden. Am Rahmen 19 sind des weiteren zwei hintere Räder 2 sowie ein vorderes Rad 2 befestigt, mittels derer der Rasenmäher über die zu bearbeitende Grünfläche fahrbar ist. Zumindest ein Teil der Räder 2 ist freilaufend auf einer zugeordneten, in den Fig. 5 und 6 gezeigten Achse 1 gelagert. Eines oder mehrere Räder 2 können auch motorisch angetrieben ausgeführt sein. Zum Schieben bzw. Führen des Rasenmähers ist am Rahmen 19 ein Handgriff 23 befestigt.

Das vordere Rad 2 ist mit einem bezogen auf die gewöhnliche Arbeitsposition des Rasenmähers im wesentlichen vertikal ausgerichteten Achsbolzen 24 verbunden. Die Baugruppe aus dem vorderen Rad 2 und dem Achsbolzen 24 ist in einem Kopfstück 25 des Rahmens 1 um eine Schwenkachse 26 schwenkbar gelagert. Bei freigegebener Verschwenkbarkeit des Achsbolzens 24 ist das vordere Rad 2 entsprechend einem Doppelpfeil 27 frei um 360° um die Schwenkachse 26 verschwenkbar. Es können auch Schwenkanschläge zur Einschränkung der Schwenkbewegung vorgesehen sein. Des weiteren ist die Baueinheit aus dem vorderen Rad 2 und dem Achsbolzen 24 in einer durch die Längsachse des Achsbolzens 24 vorgegebenen und durch einen Doppelpfeil 28 angedeuteten Achsrichtung höhenverstellbar. Durch eine Höhenverstellung des Achsbolzens 24 zusammen mit dem vorderen Rad 2 relativ zum Kopfstück 25 bzw. zum Rahmen 19 ist der vertikale Abstand des Mähwerks 21 zum Boden einstellbar, wodurch die gewünschte Schnitthöhe einstellbar ist. Anstelle der gezeigten Ausführung mit nur einem höhenverstellbaren Rad 2 können auch zwei oder auch mehr höhenverstellbare Räder 2 sowie eine Ausführung ohne Schwenklagerung vorteilhaft sein. Es kann auch eine abweichende Gesamtzahl von Rädern 2 zweckmäßig sein.

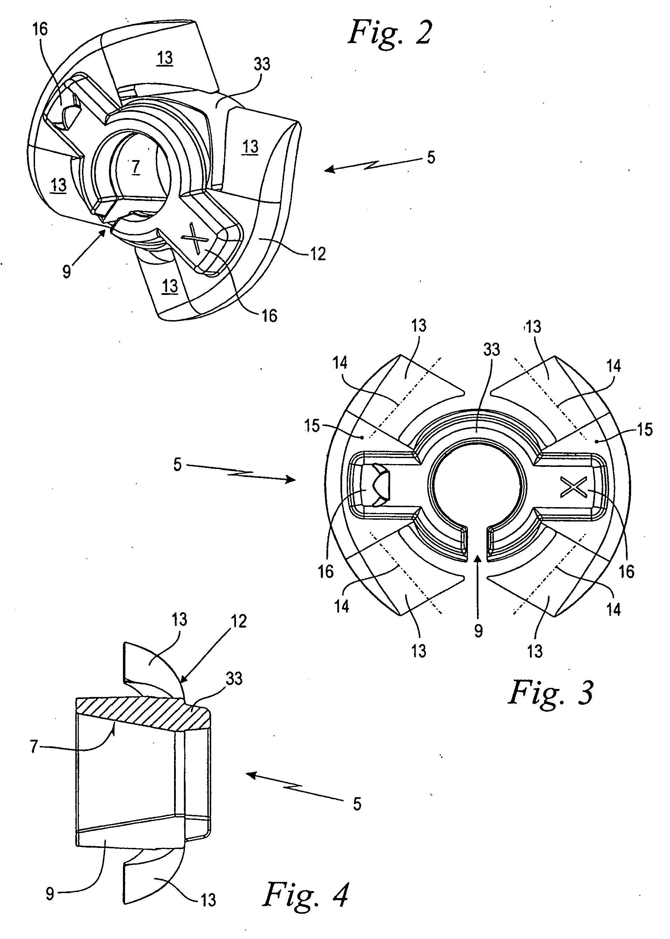

In Fig. 2 ist ein Klemmteil 5 perspektivisch dargestellt, welches zur Verspannung der Lagerung der Räder 2 des Arbeitsgerätes nach Fig. 1 vorgesehen ist. Einzelheiten zur Radanordnung und der Wirkungsweise des hier dargestellten Klemmteils 5 sind weiter unten im Zusammenhang mit den Fig. 5 und 6 beschrieben. Das Klemmteil 5 umfaßt eine mittige, etwa zylindrische Nabe 33 in Form einer Hülse, in die innenseitig ein Innenkonus 7 eingeformt ist. Die Nabe 33 ist mit einem Schlitz 9 versehen. Radial außenseitig an die Nabe 33 ist ein Flansch 12 einteilig angeformt, der im gezeigten Ausführungsbeispiel zwei diametral sich gegenüberliegende, radial hervorstehende Kragarme 16 mit jeweils zwei daran angeformten Federzungen 13 umfaßt. Das Klemmteil 5 ist aus einem elastisch nachgiebigen Kunststoffmaterial einteilig spritzgegossen. Bedingt durch die elastischen Materialeigenschaften und unterstützt durch den Schlitz 9 kann die Nabe 33 sich radial aufweiten. Die insgesamt vier Federzungen 13 sind in axialer Richtung flach ausgeführt und dadurch in axialer Richtung elastisch nachgiebig. Die Kragarme 16 sind vergleichsweise dick ausgeführt und damit relativ zu den Federzungen 13 im wesentlichen starr. Der Flansch 12 ist damit im wesentlichen im Bereich der Federzungen 13 elastisch nachgiebig.

Fig. 3 zeigt eine Draufsicht des Klemmteils 5 nach Fig. 2, demnach der Schlitz 9 in der Nabe 33 in radialer und axialer Richtung durchgängig ausgebildet ist. Es kann auch zweckmäßig sein, den Schlitz 9 zumindest in axialer Richtung nur über einen Teilbereich der Nabe 33 durchgehend auszuführen. Auch kann es vorteilhaft sein, auf den Schlitz 9 zu verzichten, wobei die radiale Nachgiebigkeit bzw. radiale Aufweitbarkeit des Klemmteils 5 allein durch die elastischen Materialeigenschaften des Klemmteils 5 bestimmt ist. Der Draufsicht nach Fig. 3 ist zu entnehmen, daß die vier beispielhaft gezeigten Federzungen 13 in Umfangsrichtung etwa gleichmäßig verteilt um die Nabe 33 angeordnet sind. Es kann auch eine abweichende Anzahl von Federzungen 13 zweckmäßig sein. Die Federzungen 13 sind mit ihren Wurzeln 15 an den zugeordneten Kragarmen 16 derart angeformt, daß ihre Längsachsen 14 zumindest näherungsweise in Umfangsrichtung zum Klemmteil 5 bzw. zur Nabe 33 verlaufen. Freie Enden der Federzungen 13 decken in radialer Richtung einen Bereich von der unmittelbaren Nähe zur Nabe 33 bis zum äußeren Umfang des Klemmteils 5 ab. Die freien, in axialer Richtung nachgiebigen Enden der Federzungen 13 sind zur Anlage an einem Wälzlager 3 entsprechend der Darstellung nach Fig. 6 vorgesehen. Es kann auch zweckmäßig sein, eine oder mehrere Federzungen 13 derart anzuordnen, daß ihre Längsachsen 14 in radialer Richtung verlaufen.

Der Längsschnittdarstellung des Klemmteils 5 nach Fig. 4 ist noch zu entnehmen, daß der Flansch 12 mit den Federzungen 13 in axialer Richtung an einem Endbereich der Nabe 33 angeordnet ist, der im montierten Zustand auf der Seite einer in Fig. 5 gezeigten freien Stirnfläche 10 der Achse 1 liegt. Dem hier gezeigten schraffierten Schnittbereich der Nabe 33 ist zu entnehmen, daß der Innenkonus 7 sich in Gegenrichtung öffnet. Es ist hier beispielhaft ein halber Öffnungswinkel von etwa 10° gewählt. Der in radialer Richtung gegenüberliegende, unschraffierte Bereich zeigt den Schlitz 9, der in radialer und axialer Richtung durchgängig ist.

Fig. 5 zeigt eine perspektivische, geschnittene Ausschnittsdarstellung eines der Räder 2 nach Fig. 1, welches mittels einer Nabe 28 auf einer Achse 1 frei drehend gelagert ist. Hierzu sind zwischen der Nabe 28 und der Achse 1 zwei Wälzlager 3, 3' vorgesehen, die im gezeigten Ausführungsbeispiel als in axialer Richtung gegeneinander verspannte Schrägkugellager ausgeführt sind. Es können auch andere Wälzlagerformen wie Radialkugellager, Kegelrollager oder dergleichen zweckmäßig sein.

In die Nabe 28 des Rades 2 sind zwei jeweils in axialer Richtung nach außen und in radialer Richtung nach innen offene Außenringe 18, 18' spiegelsymmetrisch zueinander unter Zwischenlage einer zylindrischen Distanzhülse 30 eingesetzt. Zwei Innenringe 4, 4' der Wälzlager 3, 3' sind jeweils in axialer Richtung einander zugewandt und in radialer Richtung nach außen offen. Zwischen ihnen und den zugeordneten Außenringen 18, 18' sind Wälzkörper 17 in Form von Kugeln eingeschlossen, die in Umfangsrichtung durch jeweils einen Käfig 29 auf Distanz gehalten sind. Der Innenring 4 im Bereich einer freien Stirnfläche 10 der Achse 1 sitzt mit radialem und axialem Spiel auf einem Lagersitz 31 der Achse 1. Der in axialer Richtung gegenüberliegende Innenring 4' liegt mit einem Schiebesitz auf dem Lagersitz 31 und ist in axialer Richtung gegen einen Bund 32 der Achse 1 abgestützt.

Zwischen dem Lagersitz 31 und der freien Stirnfläche 10 der Achse 1 ist diese mit einem Außenkonus 6 versehen, dessen Radius in Richtung der Stirnfläche 10 linear abnimmt. In radialer Richtung zwischen dem Außenkonus 6 und einer Innenfläche 8 des Innenrings 4 ist das Klemmteil 5 nach den Fig. 2 bis 4 angeordnet, dessen Innenkonus 7 auf den Außenkonus 6 der Achse 1 abgestimmt ist. Dabei ist das Klemmteil 5 radial außenseitig zylindrisch ausgeführt und in seinem Durchmesser auf die zylindrische Innenfläche 8 des Innenrings 4 abgestimmt. In die Stirnfläche 10 ist koaxial zur Achse 1 eine Radschraube 11 eingedreht, mit der das Klemmteil 5 in axialer Richtung verspannt ist. Die axiale Verspannung bewirkt im Zusammenspiel des Außenkonus 6 mit dem Innenkonus 7 und der zuvor beschriebenen elastischen Ausbildung des Klemmteils 5 eine elastische, radiale Aufweitung, die den Innenring 4 des Wälzlagers 3 gegenüber dem Außenkonus 6 der Achse 1 zentriert und klemmend festlegt.

Der weiteren perspektivischen Schnittdarstellung der erfindungsgemäßen Radanordnung nach Fig. 6 ist noch zu entnehmen, daß durch die axiale Verspannung des Klemmteiles 5 mittels der koaxialen Radschraube 11 die Federzungen 13 in axialer Richtung gegen den Innenring 4 des stirnseitigen Wälzlagers 3 gedrückt werden. Die elastisch nachgiebige, federnde axiale Anpreßkraft an den Innenring 4 überträgt sich von dort mittels der Wälzkörper 17 (Fig. 5) auf den zugeordneten Außenring 18, von dort mittels der Distanzhülse 30 auf den in axialer Richtung gegenüberliegenden Außenring 18', der seinerseits die axiale Anpreßkraft über die in Fig. 5 gezeigten Wälzkörper 17 auf den Innenring 4' des Lagers 3' überträgt und damit den Innenring 4' gegen den Bund 32 der Achse 1 drückt. Allein durch axiales Festziehen des Klemmteiles 5 wird neben einer radialen Verspannung des Innenrings 4 vom Wälzlager 3 auch eine elastisch nachgiebige axiale Verspannung der kompletten Lagereinheit mit den beiden Wälzlagern 3, 3' hergestellt.

Unter Umkehrung des Wirkprinzips kann es auch zweckmäßig sein, die beiden Außenringe 18, 18' in vergleichbarer Weise unter Zwischenlage der Innenringe 4, 4' gegeneinander zu verspannen. Ebenso kann es zweckmäßig sein, auch das weitere Wälzlager 3' mit einem vergleichbaren Klemmteil auszurichten und zu fixieren. Die hier vorgeschlagene, mittels des Klemmteiles 5 zentrierte und/oder verspannte Lagereinheit ist für Radanordnungen eines Arbeitsgerätes mit freilaufend auf einer Achse 1 gelagerten Rädern 2 vorgesehen. Der hier gewählte Begriff freilaufend bedeutet, daß sich das Rad 2 um die Achse 1 dreht, ohne von ihr angetrieben zu sein. Gleichwohl kann es auch zweckmäßig sein, bei der erfindungsgemäßen Anordnung einen Antrieb des Rades 2 beispielsweise durch einen externen Riementrieb oder dgl. vorzusehen.

## Patentansprüche

1. Radanordnung eines handgeführten, fahrbaren Arbeitsgerätes, wie ein Rasenmäher, eine Motorhacke, ein Vertikutierer oder dgl., mit einem um eine Achse (1) frei drehbaren Rad (2), wobei das Rad (2) mittels mindestens einem Wälzlager (3) auf der Achse (1) gelagert ist,
**dadurch gekennzeichnet, daß** in radialer Richtung zwischen der Achse (1) und einem Innenring (4) des Wälzlagers (3) ein konisches, in radialer Richtung elastisch aufweitbares Klemmteil (5) mit einem in radialer und axialer Richtung verlaufenden Schlitz (9) angeordnet ist.

2. Radanordnung nach Anspruch 1,
**dadurch gekennzeichnet, daß** die Achse (1) im Bereich des Wälzlagers (3) einen Außenkonus (6) aufweist, und daß das Klemmteil (5) mit einem auf den Außenkonus (6) abgestimmten Innenkonus (7) versehen ist.

3. Radanordnung nach Anspruch 1 oder 2,
**dadurch gekennzeichnet, daß** das Klemmteil (5) radial außenseitig zylindrisch ausgeführt und in seinem Durchmesser auf eine zylindrische Innenfläche (8) des Innenrings (4) abgestimmt ist.

4. Radanordnung nach einem der Ansprüche 1 bis 3,
**dadurch gekennzeichnet, daß** der Schlitz (9) durchgehend ist.

5. Radanordnung nach einem der Ansprüche 1 bis 4,
**dadurch gekennzeichnet, daß** die Achse (1) an einer freien Stirnfläche (10) eine insbesondere koaxial angeordnete Radschraube (11) trägt, die zum axialen Verspannen des Klemmteils (5) vorgesehen ist.

6. Radanordnung nach einem der Ansprüche 1 bis 5,
**dadurch gekennzeichnet, daß** das Klemmteil (5) auf seiner zur freien Stirnfläche (10) der Achse (1) hin weisenden Seite mit einem radial vorstehenden Flansch (12) zum axialen Verspannen des Innenrings (4) versehen ist.

7. Radanordnung nach Anspruch 6,
**dadurch gekennzeichnet, daß** der Flansch (12) in axialer Richtung elastisch federnd ausgebildet ist.

8. Radanordnung nach Anspruch 7,
**dadurch gekennzeichnet, daß** der Flansch (12) mindestens eine, insbesondere mehrere, bevorzugt gleichmäßig über den Umfang verteilte, in axialer Richtung elastisch nachgiebige Federzungen (13) aufweist, die zur axialen Anlage am Innenring (4) des Wälzlagers (3) vorgesehen sind.

9. Radanordnung nach Anspruch 8,
**dadurch gekennzeichnet, daß** eine Längsachse (14) der Federzunge (13) zumindest näherungsweise in Umfangsrichtung zum Klemmteil (5) verläuft, wobei eine Wurzel (15) der Federzunge (13) an einem radial hervorstehenden, im wesentlichen starren Kragarm (16) gehalten ist.

10. Radanordnung nach einem der Ansprüche 1 bis 9,
**dadurch gekennzeichnet, daß** insgesamt zwei Wälzlager (3, 3') in Form von Schrägwälzlagern, insbesondere Schrägkugellagern vorgesehen sind, deren Innenringe (4, 4') unter Zwischenlage von Wälzkörpern (17) und Außenringen (18, 18') der Wälzlager (3, 3') mittels des Klemmteils (5) in axialer Richtung gegeneinander verspannt sind.

## Claims

1. Wheel assembly of a manually steered, mobile working machine such as a lawnmower, a motorised cultivator, a rotivator or suchlike, with a wheel (2) that can rotate freely about an axle (1), the wheel (2) being mounted on the axle (1) by means of at least one roller bearing (3),
**characterised in that** in the radial direction between the axle (1) and the inner ring (4) of the roller bearing (3) there is arranged a conical clamping element (5) which can be expanded elastically in the radial direction, with a slit (9) that extends in the radial and axial direction.

2. Wheel assembly according to Claim 1,
**characterised in that** in the area of the roller bearing (3) the axle (1) comprises an external taper (6), and the clamping element (5) is provided with an internal taper (7) which matches the external taper (6).

3. Wheel assembly according to Claims 1 or 2,
**characterised in that** radially on the outside, the clamping element (5) is cylindrical and its diameter is matched to a cylindrical inside surface (8) of the inner ring (4) .

4. Wheel assembly according to any of Claims 1 to 3,
**characterised in that** the slit (9) is through-going.

5. Wheel assembly according to any of Claims 1 to 4,
**characterised in that** at a free end surface (10) the axle (1) carries a wheel screw (11) arranged coaxially, which is provided for axially bracing the clamping element (5).

6. Wheel assembly according to any of Claims 1 to 5,
**characterised in that** on its side facing toward the said free end surface (10) of the axle (1), the clamping element (5) is provided with a radially projecting flange (12) for axially bracing the inner ring (4).

7. Wheel assembly according Claim 6,
**characterised in that** the flange (12) is made elastically springy in the axial direction.

8. Wheel assembly according to Claim 7,
**characterised in that** the flange (12) comprises at least one and in particular several spring tabs (13) which are elastically compliant in the axial direction and are preferably distributed uniformly around its circumference, which are provided in order to rest against the inner ring (4) of the roller bearing (3) .

9. Wheel assembly according to Claim 8,
**characterised in that** a longitudinal axis (14) of the spring tabs (13) extends at least approximately in the circumferential direction relative to the clamping element (5), and a root (15) of the spring tabs (13) is held on a radially projecting, substantially solid bracket (16).

10. Wheel assembly according to any of Claims 1 to 9,
**characterised in that** a total of two roller bearings (3, 3') in the form of inclined roller bearings, in particular inclined ball bearings, are provided, whose inner rings (4, 4') are braced against one another in the axial direction by the clamping element (5) with roller bodies (17) and outer rings (18, 18') of the roller bearings (3, 3') interposed between them.

## Revendications

1. Ensemble de roues d'une machine roulante guidée à la main telle qu'une tondeuse à gazon, une motobineuse, un scarificateur ou autre, avec une roue (2) apte à tourner librement sur un axe (1), la roue (2) étant montée sur l'axe (1) à l'aide d'au moins un palier de roulement (3),
**caractérisé en ce qu'**il est prévu dans le sens radial entre l'axe (1) et une bague intérieure (4) du palier de roulement (3) une pièce de serrage (5) conique, extensible élastiquement dans le sens radial et pourvue d'une fente (9) qui s'étend dans le sens radial et dans le sens axial.

2. Ensemble de roues selon la revendication 1,
**caractérisé en ce que** l'axe (1) présente dans la zone du palier à roulement (3) un cône extérieur (6) et **en ce que** la pièce de serrage (5) est pourvue d'un cône intérieur (7) adapté au cône extérieur (6).

3. Ensemble de roues selon la revendication 1 ou 2,
**caractérisé en ce que** la pièce de serrage (5) a une forme cylindrique sur son côté extérieur radialement, et son diamètre est adapté à une surface intérieure cylindrique (8) de la bague intérieure (4) .

4. Ensemble de roues selon l'une des revendications 1 à 3,
**caractérisé en ce que** la fente (9) est continue.

5. Ensemble de roues selon l'une des revendications 1 à 4,
**caractérisé en ce que** l'axe (1) porte sur une surface frontale libre (10) une vis de roue (11) qui est disposée en particulier coaxialement et qui est destinée à caler axialement la pièce de serrage (5).

6. Ensemble de roues selon l'une des revendications 1 à 5,
**caractérisé en ce que** la pièce de serrage (5) est pourvue, sur son côté dirigé vers la surface frontale libre (10) de l'axe (1), d'un rebord (12) qui dépasse radialement et qui est destiné à caler axialement la bague intérieure (4).

7. Ensemble de roues selon la revendication 6,
**caractérisé en ce que** le rebord (12) est élastique dans le sens axial.

8. Ensemble de roues selon la revendication 7,
**caractérisé en ce que** le rebord (12) présente au moins une et notamment plusieurs languettes flexibles (13) qui sont de préférence réparties régulièrement sur la circonférence, qui font ressort dans le sens axial et qui sont destinées à être appliquées axialement contre la bague intérieure (4) du palier de roulement (3).

9. Ensemble de roues selon la revendication 8,
**caractérisé en ce qu'**un axe longitudinal (14) de la languette flexible (13) s'étend au moins approximativement dans le sens circonférentiel par rapport à la pièce de serrage (5), une base (15) de la languette (13) étant fixée à un bras en porte-à-faux (16) qui dépasse radialement et qui est globalement rigide.

10. Ensemble de roues selon l'une des revendications 1 à 9,
**caractérisé en ce qu'**il est prévu en tout deux paliers de roulement (3, 3') sous la forme de paliers de roulement obliques, en particulier de roulements à billes obliques, dont les bagues intérieures (4, 4') sont calées mutuellement dans le sens axial à l'aide de la pièce de serrage (5), avec des corps de roulement (17) et des bagues extérieures (18, 18') des paliers de roulement (3, 3') placés entre lesdites bagues.
